# EUROPEAN PATENT SPECIFICATION

(11) **EP 3 804 489 B1**
(45) Date of publication and mention of the grant of the patent: **06.11.2024**
(21) Application number: 20200487.5
(22) Date of filing: 07.10.2020
(51) Int. Cl.: A01C 5/06, A01C 11/00

(54) **TRANSPLANTER MACHINE FOR TRANSPLANTING SEEDLINGS ROOTED IN SODS IN A PREVIOUSLY CUT FURROW**
TRANSPLANTERMASCHINE ZUM TRANSPLANTIEREN VON SETZLINGEN MIT WURZELN IN EINER VORHER GESCHNITTENEN FÜRCHE
MACHINE À TRANSPLANTER POUR LA TRANSPLANTATION DE PLANTS ENRACINÉS DANS UNE SILLON PREFORMÉ

(30) Priority: 08.10.2019 IT 201900018179
(43) Date of publication of application: 14.04.2021
(73) Proprietor: Ferrari Costruzioni Meccaniche S.r.l., 46040 Guidizzolo (MN) (IT)
(72) Inventor: FERRARI, Francesco, 46040 Guidizzolo (IT)
(74) Representative: Mari, Marco Giovanni

(56) References cited:
- EP-A1- 0 546 974
- EP-A1- 2 517 544
- DE-C- 290 919
- DE-C- 564 086
- FR-A1- 2 298 270
- US-A- 1 523 348
- US-A- 4 141 302

## Description

### Technical field

The present invention relates to a transplanter machine for transplanting seedlings rooted in sods in a previously cut furrow.

### Background art

As is known, transplanter machines are used to rapidly transplant seedlings, vegetables, etc... which are previously grown in small truncated-cone, conical or cylindrical shaped sods of peat. The seedlings are supplied still rooted in the sods and must be transplanted one by one into the bare ground.

A transplanter machine, in general terms, is equipped with a feeder for the seedlings, generally in the form of a conveyor belt or a carousel; ploughshares or equivalent means for creating a furrow in the ground; an ejector, or placer, capable of positioning the seedlings in the furrow.

Naturally, these operations must be carried out very rapidly, but with a certain precision and without damaging the seedlings; in particular, correct positioning of the seedling in the furrow is very important for its rooting and growth.

Therefore, preparation of the furrow into which the seedlings are to be placed is fundamental.

Currently, preparation of the furrow is an operation carried out by a ploughshare, towed by the transplanter machine, which penetrates into the ground to a certain height, sufficient to ensure that the seedlings are planted at a suitable depth.

The ploughshare is substantially composed of two metal plates, side by side and diverging in the direction of travel of the machine.

Alternatively to the plates, the use of two flat discs diverging in the direction of travel of the machine is also known.

The ploughshare has the task of cutting and pushing the ground and pushing the soil outwards to form a furrow inside which the seedlings, or the sods that contain the roots of the seedlings to be transplanted, will subsequently be placed.

Document US 4 141 302 A discloses a transplanter machine having the features of the preamble of the independent claim, provided with a smooth flat cutter disc, positioned in front of the ploughshare. Said flat cutter disc is substantially placed inside a pair of rotating flat discs, inclined and divergent from each other, suitable to operate as ploughshare. Said rotating flat discs are mounted at appropriate angles (5 DEG at 45 DEG from horizontal) so that they contact the flat cutter disc at or slightly below the soil surface.

Document US 1 523 348 A discloses a transplanter machine where two mutually diverging rotating flat discs act as ploughshare.

The conventional use of ploughshares to make furrows for transplanting has some limits and drawbacks.

In very loose and moist soils the cut made is not neat, as the soil tends to stick to the ploughshare, causing widening of the cut while advancing. Adversely, a widening of the cut can cause incorrect positioning of the seeding during placing: if the seedling is not blocked immediately in the ground it risks overturning.

Moreover, the large size of the furrow produces a bulging of the soil, which can cause burying of the seedling during the step of closing the furrow by means of the compactor wheels.

Therefore, in general the ploughshare tends to create two ridges at the sides of the furrow with the soil turned over, which can create problems in the subsequent step to close the furrow, after placing of the seedlings.

Consequently, a furrow that is too wide and not neatly cut prevents correct placing of the seedlings, both in relation to their mutual distance and to their correct verticality.

In grounds that have been subjected to weeding, where this creates a thin permanent protective surface layer against the growth of weeds, the excessive movement of soil by the ploughshare causes of this layer to break; even subsequent closing of the furrow is unable to restore the layer damaged by the passage of the ploughshare, thereby invalidating the effect of weeding in that worked area.

In grounds containing the roots of weeds, the ploughshare is often unable to cut through the fibrous structure of the stumps of these roots completely and drags them along with it, making the furrow larger than required and altering and diminishing the quality of the work of the transplanter machine.

### Presentation of the invention

The object of the invention is to overcome these limits, producing a transplanter machine capable of preparing the ground with precise furrows, also working in very wet soils, to allow correct, rapid and safe placing of the seedlings and increasing the hourly production rate of the transplanter machine, reducing failed placing.

These objects are achieved with a transplanter machine for transplanting seedlings rooted in sods in a previously cut furrow, adapted to operate according to a direction of travel, comprising:
- a supporting frame connectable to an agricultural machine;
- means for resting and advancing on the ground in said direction of travel and means for closing the furrow;
- at least one transplanter unit,
where said at least one transplanter unit comprises:
- feed means for a plurality of seedlings;
- a ploughshare for the ground adapted to cut a furrow into which said seedlings are placed;
- means for placing said seedlings in said furrow;
- a cutter disc rotatingly associated with said supporting frame, in front of said ploughshare along said direction of travel, adapted to cut the ground in advance pre-forming said furrow, so that said ploughshare, subsequently, widens said preformed furrow,
characterized in that said cutter disc has a variable thickness that increases gradually from a maximum circumference thereof to a centre thereof, wherein said cutter disc comprises two concave circular plates, facing and joined to each other so as to form a convex structure.

Advantageously, the plane of penetration into the ground of said cutter disc is positioned at a lower height with respect to the plane of penetration into the ground of the ploughshare.

According to a further aspect of the invention, said at least one transplanter unit comprises at least one fixing arm of said cutter disc to said supporting frame.

Preferably, said at least one fixing arm comprises means for adjusting its length, to vary the height of the plane of penetration into the ground of said cutter disc.

The transplanter machine according to the invention has numerous advantages.

Said cutter disc pre-cuts the ground and any roots producing a pre-furrow, only allowing the diverging metal plates of the ploughshare to carry out the function of finishing the side walls of this furrow, opening it only to the extent strictly necessary.

As the cutter disc is rotatingly associated with the frame and consequently rotates idly about its axis, it is self-cleaning, even with clay and wet soils, making it possible to use the transplanter machine even when weather conditions would not normally allow the ground to be worked.

The convex structure of the cutter disc allows a small pre-furrow to be produced in the ground, facilitating the subsequent work of the ploughshare, which consequently only has the task of finishing the profile of the furrow adapted for placing of the seedling, without however having to move a larger amount of soil than necessary to produce the whole furrow.

The lower height of the plane of penetration of said cutter disc with respect to the height of the ploughshare allows any remaining roots not cut by the previous passage of the disc to be moved away and buried by the ploughshare.

The fixing arm and the means for adjusting its length allow the working depth of the cutter disc to be adapted to the conditions of the ground on which the ploughshare will be required to work.

Even more advantageously, the cutter disc, with respect to the ploughshare, opens a gap by compression maintaining the ground at the same level, i.e., compressing it without raising it, leaving the underlying wet part of the ground in the same position, thereby ensuring that the roots of the seedling have the correct degree of moisture when placed, and allowing the finer dry part of the ground to close and fill the surface of the furrow.

### Brief description of the drawings

These and other features and advantages of the invention will be more apparent from the detailed description set forth below, with the aid of the drawings which represent a preferred embodiment thereof, illustrated by way of non-limiting example, wherein:
Fig. 1 illustrates, in a side plan view, a transplanter machine for transplanting seedlings rooted in sods in a previously cut furrow according to the invention;
Figs. 2, 3 and 4 illustrate, respectively in an axonometric view, in a side plan view and in a cross section along a vertical plane, a part of the transplanter machine of Fig. 1.

### Detailed description of a preferred embodiment of the invention

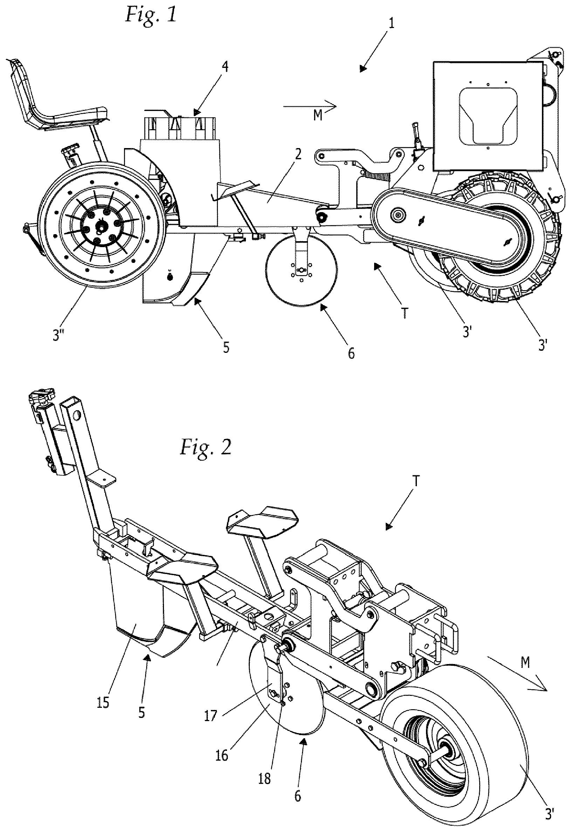

With reference to Fig. 1, there is illustrated a transplanter machine 1 for transplanting seedlings rooted in sods in a previously cut furrow, adapted to operate according to a direction of travel M, substantially comprising a supporting frame 2 provide with wheels 3' that act as means for resting on the ground and 3" that also act as means for closing the furrow of soil and ensure the depth of the furrow, with the possibility of adjusting its depth in said direction of travel M, and a transplanter unit T.

The transplanter machine 1 can be of self-propelled type, equipped with its own engine, or without an engine, to be used with an agricultural tractor or other towing vehicle, as in the variant illustrated.

In the variant illustrated, the machine 1 is provided with a single transplanter unit T, but in alternative variants several modular transplanting units could be provided on a single machine to operate simultaneously on several parallel rows.

Said transplanter unit T comprises:
- feed means 4, of the carousel type, for a plurality of seedlings;
- a ploughshare 5 for the ground adapted to cut a furrow into which said seedlings are placed;
- means for placing said seedlings in said furrow.

With particular reference to Figs. 2, 3 and 4, said transplanter unit T is illustrated in more detail.

The ploughshare 5 comprises two metal plates 15, 25 facing each other and diverging in the direction of travel of the machine 1.

Said transplanter unit T comprises a cutter disc 6 rotatingly associated, by means of bearings 18, 28, with said supporting frame 2.

Said cutter disc 6 is arranged in front of said ploughshare 5 along said direction of travel M.

The maximum circumference of said cutter disc 6 comprises the actual cutting edge, adapted to cut into the ground pre-forming the furrow into which the seedlings will then be placed.

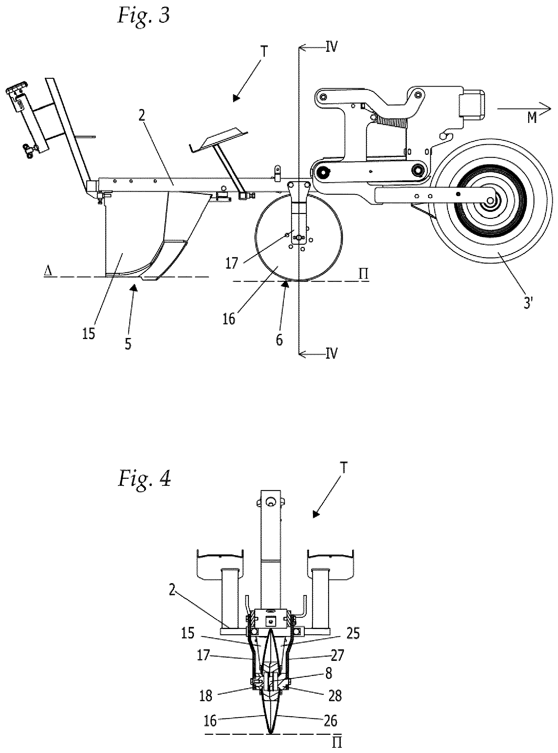

As is evident from the section of Fig. 4, said cutter disc 6 has a variable thickness that increases gradually from a maximum circumference thereof to a centre thereof.

In the variant illustrated, said cutter disc 6 comprises two concave circular plates 16, 26, facing and joined to each other so as to form a convex structure.

Said cutter disc 6 penetrates further into the ground with respect to said ploughshare 5: in substance, the plane π of penetration into the ground of said cutter disc 6 is positioned at a lower height with respect to the plane Δ of penetration into the ground of the ploughshare 5.

The difference of the two heights can be even only a few millimetres, for example 5mm, but this is sufficient to cut through and move away any remaining roots present in the ground that could obstruct subsequent passage of the ploughshare.

Said transplanter unit T comprises two fixing arms 17, 27 of said cutter disc 6 to said supporting frame 2. Said fixing arms 17, 27 are positioned at the sides of said cutter disc 6, engaging with a central pin 8 around which the bearings 18, 28 of the disc rotate.

In a possible variant, not illustrated, said fixing arms 17, 27 comprise means for adjusting their length in order to selectively vary the height of the plane π of penetration into the ground of said cutter disc 6.

Operation of the transplanter machine 1 is as follows, with reference to each single transplanter unit T.

The transplanter machine 1 advances according to a direction of travel M.

The cutter disc 6 penetrates the ground in advance cutting it and pre-forming a furrow. During its passage, the cutter disc 6 buries any remaining roots present in the ground even deeper.

Subsequently, the ploughshare 5 widens said pre-formed furrow, laterally moving the walls of soil that were created by the passage of the disc 6.

The placing means present on the transplanter machine 1 drop the seedlings rooted in sods into the definitively formed furrow and subsequently the wheels 3" earth up and close the furrow.

## Claims

1. Transplanter machine (1) for transplanting seedlings rooted in sods in a previously cut furrow, adapted to operate according to a direction of travel (M), comprising:
- a supporting frame (2) connectable to an agricultural machine;
- means (3') for resting and advancing on the ground in said direction of travel (M) and means (3") for closing the furrow;
- at least one transplanter unit (T),
where said at least one transplanter unit (T) comprises:
- feed means (4) for a plurality of seedlings;
- a ploughshare (5) for the ground adapted to cut a furrow into which said seedlings are placed;
- means for placing said seedlings in said furrow,
- a cutter disc (6) rotatingly associated with said supporting frame (2), in front of said ploughshare (5) along said direction of travel (M), adapted to cut the ground in advance pre-forming said furrow, so that said ploughshare (5), subsequently, widens said preformed furrow,
**characterized in that** said cutter disc has a variable thickness that increases gradually from a maximum circumference thereof to a centre thereof, wherein said cutter disc (6) comprises two concave circular plates (16, 26), facing and joined to each other so as to form a convex structure.

2. Transplanter machine (1) according to claim 1, **characterized in that** the plane (π) of penetration into the ground of said cutter disc (6) is positioned at a lower height with respect to the plane (Δ) of penetration into the ground of the ploughshare (5).

3. Transplanter machine (1) according to claim 2, **characterized in that** said at least one transplanter unit (T) comprises at least one fixing arm (17, 27) of said cutter disc (6) to said supporting frame (2).

4. Transplanter machine (1) according to claim 3, **characterized in that** said at least one fixing arm (17, 27) comprises means for adjusting its length to vary the height of the plane (π) of penetration into the ground of said cutting disc (6).

## Patentansprüche

1. Verpflanzmaschine (1) zum Verpflanzen von in Soden verwurzelten Sämlingen in eine zuvor ausgehobene Furche, geeignet, um in einer Fahrtrichtung (M) zu arbeiten, umfassend:
- einen Stützrahmen (2), der mit einer Landwirtschaftsmaschine verbunden werden kann;;
- Mittel zum Aufstützen und Fortbewegen (3) auf dem Boden in der besagten Fahrtrichtung (M) und Mittel (3"), um die Furche zu schließen;
- mindestens eine Verpflanzeinheit (T),
wobei die besagte mindestens eine Verpflanzeinheit (T) Folgendes umfasst:
- Zuführmittel (4) für eine Vielzahl von Sämlingen;
- eine Pflugschar (5) für den Boden, geeignet, um eine Furche zu ziehen, in die die besagten Sämlinge gelegt werden;
- Mittel zum Platzieren der besagten Sämlinge in die besagte Furche,
- eine Schneidscheibe (6), die drehbar mit dem besagten Stützrahmen (2) verbunden ist, vor der besagten Pflugschar (5) entlang der besagten Fahrtrichtung (M), geeignet, um den Boden im Voraus zu schneiden und die besagte Furche vorzuformen, so dass die besagte Pflugschar (5) anschließend die vorgeformte Furche verbreitert,
**dadurch gekennzeichnet, dass** die besagte Schneidscheibe eine variable Dicke aufweist, die von ihrem maximalen Umfang zu ihrer Mitte hin allmählich zunimmt, wobei die besagte Schneidscheibe (6) zwei konkave kreisförmige Scheiben (16, 26) umfasst, die einander zugewandt und miteinander verbunden sind, so dass sie eine konvexe Struktur bilden.

2. Verpflanzmaschine (1) gemäß Anspruch 1, **dadurch gekennzeichnet, dass** die Ebene (π) des Eindringens der besagten Schneidscheibe (6) in den Boden auf einer niedrigeren Höhe als die Ebene (A) des Eindringens der Pflugschar (5) in den Boden angeordnet ist.

3. Verpflanzmaschine (1) gemäß Anspruch 2, **dadurch gekennzeichnet, dass** die besagte mindestens eine Verpflanzeinheit (T) mindestens einen Befestigungsarm (17, 27) der besagten Schneidscheibe (6) an den besagten Stützrahmen (2) umfasst.

4. Verpflanzmaschine (1) gemäß Anspruch 3, **dadurch gekennzeichnet, dass** der besagte mindestens eine Befestigungsarm (17, 27) Mittel zum Einstellen seiner Länge umfasst, um die Höhe der Ebene (π) des Eindringens der besagten Schneidscheibe (6) in den Boden zu verändern.

## Revendications

1. Machine à transplanter (1) pour la transplantation de plants enracinés dans un sillon préformé, adaptée pour fonctionner selon un sens de marche (M), comprenant :
- un châssis de support (2) pouvant être relié à une machine agricole ;
- des moyens (3') pour reposer et avancer sur le sol dans ladite direction de déplacement (M) et des moyens (3") pour fermer le sillon ;
- au moins une unité de transplantation (T),
où ladite au moins une unité de transplantation (T) comprend :
- des moyens d'alimentation (4) d'une multitude de plants ;
- un soc (5) pour le sol adapté pour creuser un sillon dans lequel sont placés lesdits plants ;
- des moyens pour placer lesdits plants dans ledit sillon,
- un disque de coupe (6) associé en rotation audit châssis de support (2), devant ledit soc (5) le long de ladite direction de déplacement (M), adapté pour couper le sol à l'avance en préformant ledit sillon, de sorte que ledit soc (5) élargisse par la suite ledit sillon créé,
**caractérisée par le fait que** ledit disque de coupe a une épaisseur variable qui augmente progressivement d'une circonférence maximale de celui-ci vers un centre de celui-ci, où ledit disque de coupe (6) comprend deux plaques circulaires concaves (16, 26), face à face et jointes l'une à l'autre de manière à former une structure convexe.

2. Machine à transplanter (1) selon la revendication 1, **caractérisée par le fait que** le plan (π) de pénétration dans le sol dudit disque de coupe (6) est positionné à une hauteur inférieure par rapport au plan (Δ) de pénétration dans le sol du soc (5).

3. Machine à transplanter (1) selon la revendication 2, **caractérisée par le fait que** ladite au moins une unité de transplantation (T) comprend au moins un bras de fixation (17, 27) dudit disque de coupe (6) audit châssis de support (2).

4. Machine à transplanter (1) selon la revendication 3, **caractérisée par le fait que** ledit au moins un bras de fixation (17, 27) comprend des moyens de réglage de sa longueur pour faire varier la hauteur du plan (π) de pénétration dans le sol dudit disque de coupe (6).
